# EUROPÄISCHE PATENTSCHRIFT

(11) **EP 2 989 435 B1**
(45) Veröffentlichungstag und Bekanntmachung des Hinweises auf die Patenterteilung: **16.08.2017**
(21) Anmeldenummer: 14710191.9
(22) Anmeldetag: 07.03.2014
(51) Int. Cl.: G01M 3/10, G01M 3/38

(54) **VERFAHREN SOWIE VORRICHTUNG ZUR DICHTIGKEITSPRÜFUNG VON GROSSVOLUMIGEN BEHÄLTERN**
METHOD AND DEVICE FOR TESTING THE TIGHTNESS OF LARGE-VOLUME CONTAINERS
PROCÉDÉ ET DISPOSITIF PERMETTANT LE CONTRÔLE DE L'ÉTANCHÉITÉ DE CONTENANTS DE GRAND VOLUME

(30) Priorität: 23.04.2013 DE 102013006943
(43) Veröffentlichungstag der Anmeldung: 02.03.2016
(73) Patentinhaber: KHS GmbH, 44143 Dortmund (DE)
(72) Erfinder: BERGER, Thomas, 61479 Glashütten (DE); FREIHERR VON FÜRSTENBERG, Benedikt, 77871 Renchen-Ulm (DE)
(86) Internationale Anmeldenummer: PCT/EP2014/000590
(87) Internationale Veröffentlichungsnummer: WO 2014/173479

(56) Entgegenhaltungen:
- EP-A1- 0 450 688
- DE-A1- 3 813 410
- DE-A1-102008 020 273

## Beschreibung

Die Erfindung bezieht sich auf ein Verfahren gemäß Oberbegriff Patentanspruch 1 sowie auf eine Vorrichtung gemäß Oberbegriff Patenanspruch 8.

Verfahren und Vorrichtungen zur Dichtigkeitsprüfung von gefüllten und verschlossenen Behältern in Form von Flaschen sind bekannt (DE 10 2008 052 634 A1, DE 10 2009 039 875 A1, EP 0 450 688 A1). Diese bekannten Verfahren sind für großvolumige bzw. fassartige Behälter weder bestimmt, noch geeignet.

Bekannt sind auch Verfahren zur Dichtigkeitsprüfung großvolumiger bzw. fassartiger Behälter unter Verwendung eines Prüfkopfes (EP 0 441 632 A2, DE 38 13 410 A1), der auf den jeweiligen Behälter im Bereich seines Ventils aufgesetzt wird, um einen das Ventil des Behälters aufnehmenden und zur Umgebung hin abgedichteten Prüfraum zu schaffen. Bei der Dichtigkeitsprüfung wird der Druck im Prüfraum mit einem Drucksensor überwacht. Hierfür wird bei einem dieser bekannten Verfahren (EP 0 441 632 A2) der Prüfraum zunächst mit Wasser vollständig gefüllt und dann verschlossen, sodass bereits geringe, aus dem zu prüfenden Behälter austretende Gasmengen zu einer Druckerhöhung im Prüfraum führen und damit vom Drucksensor erfasst werden können. Bei einem anderen dieser bekannten Verfahren (DE 38 13 410 A) wird der Prüfraum zunächst mit dem Unterdruck einer Unterdruckquelle beaufschlagt und nach einem Trennen der Verbindung zwischen der Unterdruckquelle und den Prüfraum wird dann der Druck im Prüfraum auf einen evtl. Druckanstieg überwacht. Nachteilig bei diesen bekannten Verfahren ist u.a., dass sie einen dichten Abschluss des Prüfraumes gegenüber der Umgebung voraussetzen, was in der Praxis beispielsweise wegen eines Fehlverhaltens von Dichtungen am Prüfkopf nicht grundsätzlich gewährleistet ist.

Bekannt ist weiterhin auch ein Verfahren zur Druckprüfung von gefüllten und mit einem Ventil oder Fitting verschlossenen großvolumigen bzw. fassartigen Behältern (DE 10 2008 020 273 A1, DE 93 13 923.3 U1). Die Dichtigkeitsprüfung erfolgt bei diesem bekannten Verfahren durch optische Überprüfung Außenseite des jeweiligen Behälters im Bereich seines Ventils bzw. Fittings nach dem Füllen, wobei Abweichungen der Oberflächenstruktur und/oder Oberflächenfarbgebung an der Außenseite des Fittings von vorgegebenen Sollwerten durch ausgetretenes Füllgut oder Schaumbildung als Kriterium für eine bestehende Undichtigkeit verwendet werden. Speziell kleinere Undichtigkeiten oder Leckagen, die erst über längere Zeit zu einem Druckverlust im Innenraum des Behälters führen, können mit diesen bekannten Verfahren nicht oder nur schwer erkannt werden. Hierbei ist auch bekannt, bei der Dichtigkeitsprüfung das Füllgut im Behälter mit Ultraschall zu beaufschlagen.

Aufgabe der Erfindung ist es, ein Verfahren aufzuzeigen, mit dem effektiv und zuverlässig eine Dichtigkeitsprüfung von großvolumigen, mit einem Füllgut gefüllten und mit einem Ventil oder Fitting geschlossenen Behälter möglich ist. Zur Lösung dieser Aufgabe ist ein Verfahren entsprechend dem Patentanspruch 1 ausgebildet. Eine Vorrichtung ist Gegenstand des Patentanspruchs 6. Großvolumige Behälter sind im Sinne der Erfindung fassartige Behälter, die in der Regel auch als "KEG" bezeichnet werden und beispielsweise aus Metall (Metall-KEG) oder aber aus Kunststoff (Kunststoff-KEG), beispielsweise PET bestehen und deren Behälterinnenraum jeweils durch ein Ventil bzw. Fitting verschlossen ist, welches speziell bei aus Kunststoff bestehenden KEGs erst nach dem Befüllen am Behälter befestigt wird. Großvolumige oder fassartige Behälter sind im Sinne der Erfindung auch Einweg-Kunststoff-KEGs.

Mit dem erfindungsgemäßen Verfahren ist eine Dichtigkeitsprüfung zuverlässig auch mit hoher Leistung (Anzahl der geprüften Behälter je Zeiteinheit) möglich. Insbesondere ist mit dem erfindungsgemäßen Verfahren eine sichere Leckage-Erkennung möglich, und zwar durch eine ausreichend hohe Druckdifferenz zwischen dem Innenraum des jeweiligen Behälters und der äußeren Umgebung/Volumen oder Prüfraum, in welchem das wenigstens eine Sensorelement angeordnet ist.

Bei der Erfindung wird der Prüfraum in der Regel von einem beispielsweise glockenartigen Prüfkopf gebildet, der für die Dichtigkeitsprüfung auf die Außenseite des Behälters im Bereich seines Ventils bzw. im Bereich seiner Behältermuffe aufgesetzt wird, und zwar zumindest bei einer Beaufschlagung des Prüfraumes mit dem Unterdruck oder Vakuum in Dichtlage am Behälter.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

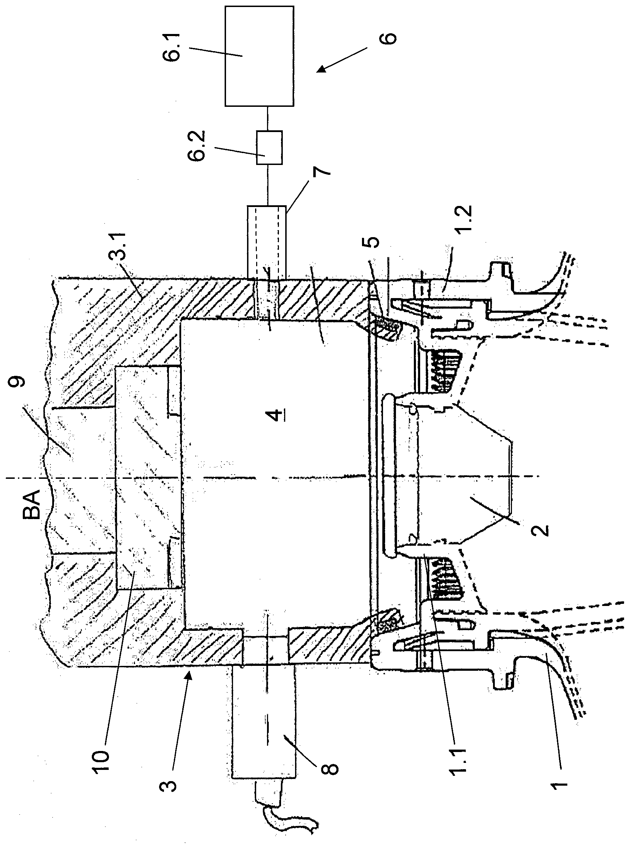

Weiterbildungen, Vorteile und Anwendungsmöglichkeiten der Erfindung ergeben sich auch aus der nachfolgenden Beschreibung von Ausführungsbeispielen und aus der Figur. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figur, die in vereinfachter Teildarstellung und teilweise im Schnitt einen als KEG ausgebildeten Behälter 1 im Bereich seines Ventils 2 (Fitting) zusammen mit einem Prüfkopf 3 zeigt, näher erläutert.

Der glockenartig ausgebildete Prüfkopf 3 dient zur Prüfung der Dichtheit (Dichtigkeitsprüfung) des mit einem Füllgut gefüllten und mit dem Ventil 2 verschlossenen Behälters 1 im Bereich dieses Ventils. Für die Dichtigkeitsprüfung wird der Prüfkopf 3 auf den Behälter 1 derart aufgesetzt, dass der Behälter 1 an seinem Ventil 2 und an seinem Mündung- oder Öffnungsring 1.1 in einen Prüfraum 4 des Prüfkopfes 3 zur Umgebung hin abgedichtet aufgenommen ist. Der Prüfkopf 3 besitzt hierfür u.a. eine ringförmige Dichtung 5, die gegen die Innenfläche einer das Ventil 2 und den Mündungsring 1.1 umschließenden und das Ventil 2 auch schützenden ringförmigen Behältermuffe 1.2 anliegt.

Für die Dichtigkeitsprüfung wird eine Druckdifferenz zwischen dem Druck im Prüfraum 4 und dem Innendruck des Behälters 1 erzeugt, beispielsweise durch Evakuieren des Prüfraumes 4 über einen mit einer Vakuumeinrichtung 6 verbundenen Vakuumanschluss 7. Die Vakuumeinrichtung besteht z.B. aus einer Unterdruck- oder Vakuumquelle 6.1 und einem Steuerventil 6.2 in der Verbindung zum Vakuumanschluss 7. Der Innendruck des Prüfraumes 4 wird mit einem am Prüfkopf 3 vorgesehenen Drucksensor 8 (Druckmessumformer) erfasst und/oder überwacht. Die Beaufschlagung des Prüfraums 4 mit Vakuum wird z.B. so gesteuert, dass sich eine ausreichende Druckdifferenz zwischen dem Innenraum des Behälters 1 und dem Prüfkopfraum 4 einstellt und dann die Verbindung zur Vakuumquelle 6.1 gesperrt wird.

Füllgut, welches während der Dichtigkeitsprüfung bei einer eventuellen Undichtigkeit des Behälters 1 und/oder des Ventil 2 in den Prüfraum 4 austritt, wird mit einer Kamera 9 erfasst, die hinter einem mit einer Scheibe 10 versehenen Fenster vorgesehen und deren optische Achse vorzugsweise achsgleich mit der Achse BA des Behälters 1 bzw. des Ventils 2 angeordnet ist, so dass mit der Kamera der im Prüfraum 4 angeordnete Bereich des Behälters 1 erfasst wird.

Handelt es sich bei dem in den Behälter 1 abgefüllten Füllgut um ein solches, welches zur Schaumbildung neigt, wie dies beispielsweise bei CO2-haltigen Getränken, insbesondere Bier der Fall ist, so wird mit der Kamera 9 diese Schaumbildung überwacht. Als Kriterium für eine vorhandene Undichtigkeit dient also primär der mit der Kamera 9 erfasste Austritt von Füllgut aus dem Behälter 1 in den Prüfraum 4 bzw. eine entsprechende Schaumbildung im Prüfraum 4. Werden ein Füllgutaustritt und/oder eine Schambildung nicht festgestellt, so bedeutet dies, dass der betreffende Behälter 1 und dessen Ventil 2 dicht sind.

Mit dem Drucksensor 8 wird weiterhin auch ein auf eine Undichtigkeit schließender Druckabfall erfasst, d.h. bei bestehender Undichtigkeit fällt der Unterdruck im Prüfraum 4 ab, sodass der dann von dem Drucksensor 8 gemessene Druckanstieg als weiteres Kriterium für eine Undichtigkeit des Behälters 1 und/oder des Ventils 2 dient. Die Beaufschlagung des Prüfraumes 4 über den Vakuumanschluss 7 mit Vakuum bzw. Unterdruck erfolgt hierbei vorzugsweise zeitgesteuert, d.h. nach einer vorgegebenen Zeitdauer wird der Prüfraum 4 von der Vakuum- oder Unterdruckquelle 6.1 getrennt. In der anschließenden Prüfzeit werden mit dem Drucksensor 8 der dann im Prüfraum 4 herrschende Druck bzw. dessen Verlauf erfasst.

Die Überwachung der Undichtigkeit erfolgt grundsätzlich durch erhöhte Druckdifferenzen zwischen dem Innenraum des Behälters und dem Prüfkopfinnenraum 4. Vorstehend wurde davon ausgegangen, dass diese Druckdifferenz durch die Beaufschlagung des Prüfraumes 4 mit Vakuum bzw. Unterdruck erzeugt wird. Entsprechend einer weiteren Ausführungsform der Erfindung besteht aber auch die Möglichkeit, diese erhöhte Druckdifferenz durch Erhöhung des Innendruckes des Behälters 1 zu erzeugen, und zwar durch äußere Einwirkung auf den Behälter 1 und/oder auf das Füllgut in diesem Behälter.

Bei dieser Ausführungsform der Erfindung ist der Prüfraum 4 beispielsweise mit Atmosphären oder Umgebungsdruck oder aber wiederum mit Vakuum bzw. mit Unterdruck beaufschlagt. Die äußere Einwirkung auf den Behälter 1 bzw. auf das Füllgut in diesem Behälter kann auf unterschiedlichste Weise erfolgen, z.B. durch eine gesteuerte elastische Verformung der Wandung des Behälters 1 im Sinne einer vorübergehenden Reduzierung des Behältervolumens, vorzugsweise durch mechanische Mittel, wodurch der Innendruck des Behälters 1 ansteigt, oder aber durch einen Energieeintrag in das Füllgut, z.B. durch Ultraschall, Wärme usw., was insbesondere auch bei CO2-haltigen Füllgütern zu einem Austritt von CO2-Gas aus dem Füllgut und damit Anstieg des Innendrucks im Behälter 1 führt. Weiterhin kann die äußere Einwirkung auf das Füllgut auch durch Erschütterung des Behälters 1 erfolgen, was ebenfalls bei CO2-haltigen Füllgütern zu einem CO2-Austritt aus dem Füllgut und damit zu einem Anstieg des Innendrucks des betreffenden Behälters führt. Die eigentliche Dichtigkeitsprüfung erfolgt wiederum mit dem am Behälter 1 angeordneten Prüfkopf 3 durch Überwachung von eventuell in den Prüfraum 4 austretendem Füllgut oder einer entsprechenden Schaumbildung mit der Kamera 9. Ist der Prüfraum 4 bei dieser Ausführung während der Dichtigkeitsprüfung zur Umgebung hin dicht verschlossen, so kann auch der mit dem Drucksensor 8 gemessene Druck im Prüfraum 4 als weiters Kriterium für das Vorliegen einer Undichtigkeit verwendet werden.

Die beiden vorgenannten Verfahren können jeweils alternativ oder aber einander ergänzend verwendet werden, wobei selbstverständlich jedes dieser Verfahren bei der Dichtigkeitsprüfung jeweils auch mehrfach, zumindest zweifach wiederholt durchgeführt werden kann.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1: Behälter
- 1.1: Öffnungsring
- 1.2: Behältermuffe
- 2: Ventil (Fitting)
- 3: Prüfkopf
- 4: Prüfraum
- 5: Dichtung
- 6: Unterdruck- oder Vakuumeinheit
- 6.1: Vakuumquelle
- 6.2: Steuerventil
- 7: Vakuumanschluss
- 8: Drucksensor (Druckmessumformer)
- 9: Kamera
- 10: Scheibe

- BA: Behälterachse

## Patentansprüche

1. Verfahren zur Dichtigkeitsprüfung von mit einem Füllgut gefüllten und mit einem Ventil (2) verschlossenen großvolumigen oder fassartigen Behältern (1) unter Verwendung wenigstens einer Sensoreinrichtung, die den jeweiligen Behälter (1) an einem in einem Prüfraum (4) aufgenommenen und das Ventil (2) aufweisenden Bereich überwacht und im Falle einer Undichtigkeit des Behälters (1) und/oder des Ventils (2) ein diese Undichtigkeit anzeigendes Signal liefert, wobei der Prüfraum (4) innerhalb eines auf den Behälter (1) aufgesetzten und bei der Dichtigkeitsprüfung in Dichtlage am Behälter (1) angeordneten glockenartigen Prüfkopfes (3) gebildet ist,
bei dem bei der Dichtigkeitsprüfung der Druck im Prüfraum (4) mit einem Drucksensor (8) der Sensoreinrichtung überwacht wird,
bei dem zur Dichtigkeitsprüfung eine Druckdifferenz zwischen dem Behälterinnenraum und dem Prüfraum (4) erzeugt oder eine entsprechende Druckdifferenz erhöht wird und hierfür der Prüfraum (4) mit einem Unterdruck oder Vakuum beaufschlagt wird, **dadurch gekennzeichnet, dass** anschließend mit zumindest einer Kamera (9) der Sensoreinrichtung ein Austreten von Füllgut in den Prüfraum (4) und/oder eine Schaumbildung des Füllgutes im Prüfraum (4) bei einer Undichtigkeit erfasst werden, wobei die Kamera (9) hinter einem mit einer Scheibe (10) versehenen Fenster vorgesehen ist.

2. Verfahren nach Anspruch 1, **dadurch gekennzeichnet, dass** zur Erzeugung oder Erhöhung der Druckdifferenz eine Einflussnahme auf den Behälter (1) im Sinne einer Verringerung des Volumens des Behälterinnenraums und/oder eine Einflussnahme auf das Füllgut erfolgt.

3. Verfahren nach Anspruch 1 oder 2, **dadurch gekennzeichnet, dass** die Einflussnahme auf das Füllgut durch Energieeintrag erfolgt.

4. Verfahren nach Anspruch 2 oder 3, **dadurch gekennzeichnet, dass** bei einem zum Aufschäumen neigenden Füllgut und/oder bei einem CO2-haltigen Füllgut die Einflussnahme auf dieses Füllgut im Sinne eines Freisetzens von CO2-Gas erfolgt.

5. Verfahren nach einem der Ansprüche 2 - 4, **dadurch gekennzeichnet, dass** eine Änderung des Druckes im Prüfraum (4) während einer Prüfzeit als Kriterium für eine bestehende Undichtigkeit des Behälters (1) und/oder des Ventils (2) dient.

6. Vorrichtung zur Dichtigkeitsprüfung von mit einem Füllgut gefüllten und mit einem Ventil (2) verschlossenen großvolumigen oder fassartigen Behältern (1), mit einem bei der Dichtigkeitsprüfung auf den jeweiligen Behälter im Bereich seines Ventils (2) aufsetzbarem glockenartigen Prüfkopf (3), der einen Prüfraum (4) bildet, welcher den Behälter im Bereich einer Behältermuffe (6) und des dortigen Ventils (2) aufnimmt und mit Umgebungsdruck oder mit Unterdruck beaufschlagbar ist, **dadurch gekennzeichnet, dass** am Prüfkopf (3) eine Kamera (9) vorgesehen ist, die hinter einem mit einer Scheibe (10) versehenen Fenster vorgesehen ist und die auf den Behälter im Bereich des im Prüfraum (4) aufgenommenen Ventils (2) gerichtet ist und wobei am Prüfkopf (3) ein den Druck im Prüfraum (4) erfassender Drucksensor (8) vorgesehen ist.

## Claims

1. Method for testing the tightness of large-volume or barrel-like containers (1) which are filled with a filling substance and closed by a valve (2), using at least one sensor system that monitors the respective container (1) in a region having the valve (2) and accommodated in a testing chamber (4) and, if there is a lack of tightness in the container (1) and/or the valve (2), a signal indicating this lack of tightness is issued, wherein the testing chamber (4) is formed inside a bell-shaped testing head (3) mounted onto the container (1) and arranged in sealing position at the container (1) during the tightness test,
with which, during the tightness test, the pressure in the testing chamber (4) is monitored by a pressure sensor (8) of the sensor system,
with which, for the tightness test, a pressure difference is created between the container interior and the testing chamber (4), or a corresponding pressure difference is increased, and for this purpose the testing chamber (4) is subjected to an underpressure or vacuum, **characterised in that**, following this, by means of at least one camera (9) of the sensor system, an emergence of filling substance into the testing chamber (4) and/or a foam formation of the filling substance in the testing chamber (4) in the event of a lack of tightness is detected, wherein the camera (9) is provided behind a window provided with a pane (10).

2. Method according to claim 1, **characterised in that**, in order to produce or increase the pressure difference, an influence is exerted onto the container (1) in the sense of a reduction in the volume of the container interior and/or an influence is exerted onto the filling product.

3. Method according to claim 1 or 2, **characterised in that** the influence is exerted onto the filling product by the application of energy.

4. Method according to claim 2 or 3, **characterised in that**, with a filling product which is inclined to the formation of foam and/or a filling product containing CO₂, the exerting of influence on this filling product takes place in the sense of a release of CO₂ gas.

5. Method according to any one of claims 2 - 4, **characterised in that** a change of the pressure in the testing chamber (4) during a testing period serves as a criterion for the existence of a lack of tightness in the container (1) and/or the valve (2).

6. Device for testing the tightness of large-volume or barrel-like containers (1) which are filled with a filling substance and closed by a valve (2),
with a bell-shaped testing head (3) which, during the tightness test, can be placed onto the respective container in the region of its valve (2), which forms a testing chamber (4), which accommodates the container in the region of a container socket (6) and the valve (2) located there, and which can be subjected to ambient pressure or underpressure, **characterised in that** a camera (9) is provided at the test head (3), provided behind a window provided with a pane (10), and which is directed onto the container in the region of the valve (2) accommodated in the testing chamber (4), and wherein, at the test head (3), a pressure sensor (8) is provided which detects the pressure in the testing chamber (4).

## Revendications

1. Procédé de vérification d'étanchéité de récipients (1) remplis d'un produit de remplissage et de type fût ou à grand volume fermés avec une valve (2) en utilisant au moins un dispositif capteur qui surveille le récipient concerné (1) sur une zone reçue dans un espace de vérification (4) et présentant la valve (2) et fournit en cas de défaut d'étanchéité du récipient (1) et/ou de la valve (2) un signal affichant ce défaut d'étanchéité, dans lequel l'espace de vérification (4) est formé dans une tête de vérification (3) de type cloche agencée lors de la vérification d'étanchéité en position étanche sur le récipient (1) et placée sur le récipient (1),
pour lequel lors de la vérification d'étanchéité, la pression est surveillée dans l'espace de vérification (4) avec un capteur de pression (8) du dispositif capteur,
pour lequel pour la vérification d'étanchéité, une différence de pression entre l'espace intérieur de récipient et l'espace de vérification (4) est générée ou une différence de pression correspondante est augmentée et à cet effet l'espace de vérification (4) est alimenté en une dépression ou un vide, **caractérisé en ce que**
avec au moins une caméra (9) du dispositif capteur, une sortie de produit de remplissage dans l'espace de vérification (4) et/ou une formation de mousse du produit de remplissage dans l'espace de vérification (4) en cas de défaut d'étanchéité sont ensuite détectées, dans lequel la caméra (9) est prévue derrière une fenêtre pourvue d'une vitre (10).

2. Procédé selon la revendication 1, **caractérisé en ce que** pour la génération ou l'augmentation de la différence de pression, une influence sur le récipient (1) est effectuée au sens d'une diminution du volume de l'espace intérieur de récipient et/ou une influence est effectuée sur le produit de remplissage.

3. Procédé selon la revendication 1 ou 2, **caractérisé en ce que** l'influence sur le produit de remplissage est effectuée par apport d'énergie.

4. Procédé selon la revendication 2 ou 3, **caractérisé en ce que** pour un produit de remplissage enclin au moussage et/ou pour un produit de remplissage contenant du CO₂, l'influence sur ce produit de remplissage est effectuée au sens d'une libération du gaz CO₂.

5. Procédé selon l'une des revendications 2 à 4, **caractérisé en ce qu'**une modification de la pression dans l'espace de vérification (4) pendant un temps de vérification sert de critère pour un défaut d'étanchéité existant du récipient (1) et/ou de la valve (2).

6. Dispositif de vérification d'étanchéité de récipients (1) remplis d'un produit de remplissage et de type fût ou à grand volume fermés avec une valve (2), avec une tête de vérification (3) de type cloche pouvant être placée lors de la vérification d'étanchéité sur le récipient concerné dans la zone de sa valve (2), qui forme un espace de vérification (4) qui reçoit le récipient dans la zone d'un manchon de récipient (6) et de la valve qui s'y trouve (2) et peut être alimenté en pression ambiante ou en dépression,
**caractérisé en ce que**
sur la tête de vérification (3) est prévue une caméra (9) qui est prévue derrière une fenêtre pourvue d'une vitre (10) et qui est dirigée vers le récipient dans la zone de la valve (2) reçue dans l'espace de vérification (4) et dans lequel un capteur de pression (8) détectant la pression dans l'espace de vérification (4) est prévu sur la tête de vérification (3).
